# EUROPEAN PATENT SPECIFICATION

(11) **EP 0 753 429 B1**
(45) Date of publication and mention of the grant of the patent: **10.05.2000**
(21) Application number: 96111078.0
(22) Date of filing: 10.07.1996
(51) Int. Cl.: B60R 1/02, B60R 16/02

(54) **Saddle for establishing directional changes in a flexible cable and apparatus using such a saddle**
Träger zur Herstellung einer Richtstrahländerung in einem flexiblen Kabel und eine Vorrichtung mit einem derartigen Träger
Support pour établir un changement directionnel dans un câble flexible et dispositif utilisant un tel support

(30) Priority: 13.07.1995 GB 9514274
(43) Date of publication of application: 15.01.1997
(73) Proprietor: THE WHITAKER CORPORATION, Wilmington, Delaware 19808 (US)
(72) Inventor: Pryce, John Edward, Hertford Heath, Hertfordshire SG13 7RG (GB)
(74) Representative: Heinz-Schäfer, Marion

(56) References cited:
- DE-A- 3 641 706
- DE-A- 4 027 952

## Description

This invention relates to a saddle for altering the direction of a cable and in particular to an apparatus useful in connecting the rotatable portion of an automotive airbag system, i.e. that component mounted on the steering wheel, and those components of the airbag system that are stationary with respect to the car body.

It is typical in modern automobiles to incorporate an airbag restraint system. On the driver's side of the automobile, the airbag system is commonly incorporated into the steering wheel assembly. The airbag device is actuated by crash sensors within the car body and must be in continuous electrical connection therewith. A problem arises in the interconnection of the stationary portion of the system with the rotatable portion upon the steering wheel in that it is necessary to maintain electrical engagement therebetween without adversely effecting the operation of the automobile or the airbag system.

In order to achieve the afore mentioned interconnection, it is known to provide a "clock spring housing unit" that typically includes an outer housing and an inner rotatable hub. The "clock spring" is the electrical conductor. These conductors are wound in a loose spiral manner within an annular cavity defined by the outer housing and inner hub member so that the conductors take on a clock spring like appearance. The device as described enables the conductors to be fed along the stem of the steering assembly to the "clock spring housing unit" where the conductors are then displaced into the cavity and wound in the above described "clock spring" fashion. The "clock spring" is disposed transversely the steering wheel stem and the conductors lying along.

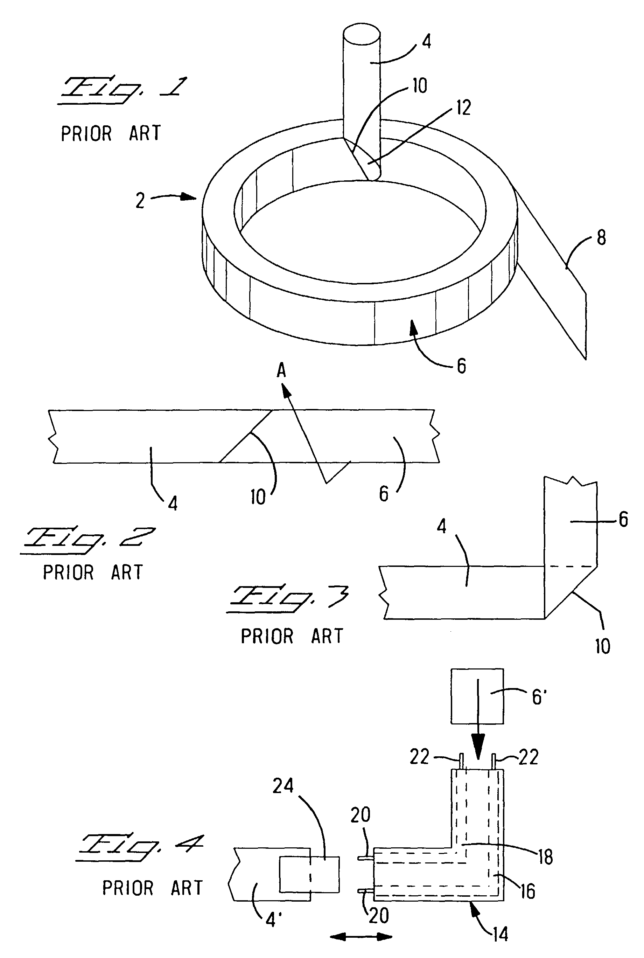

It is this change of direction that presents a problem in the known systems of this type. With reference to Figure 1, an electrical conductor wound as described is shown generally at 2. The conductor 2 includes a lead-in portion 4 that would be extending along the steering wheel stem, a spirally coiled portion 6 that is oriented transversely to the axis of the lead-in portion 4, and an exit portion 8 that would extend tangentially outward to be inter connected with the airbag unit upon the steering wheel. The coil portion 6 may include multiple loops of the conductor 2. The lead-in portion 4 transitions to the coiled portion 6 by way of a fold 10 such that a portion 12 of the lead-in 4 is overlying the coiled portion 6.

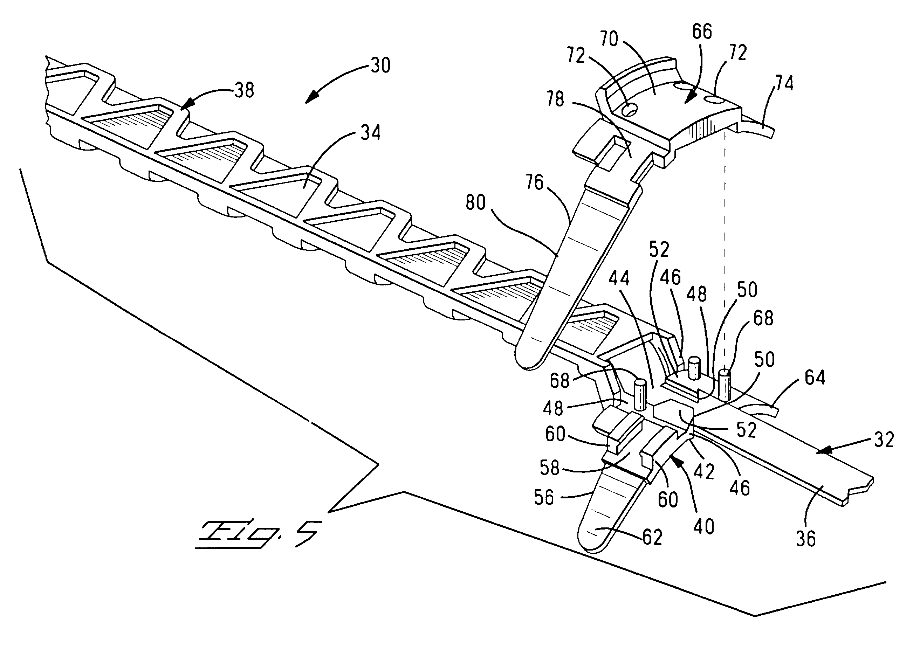

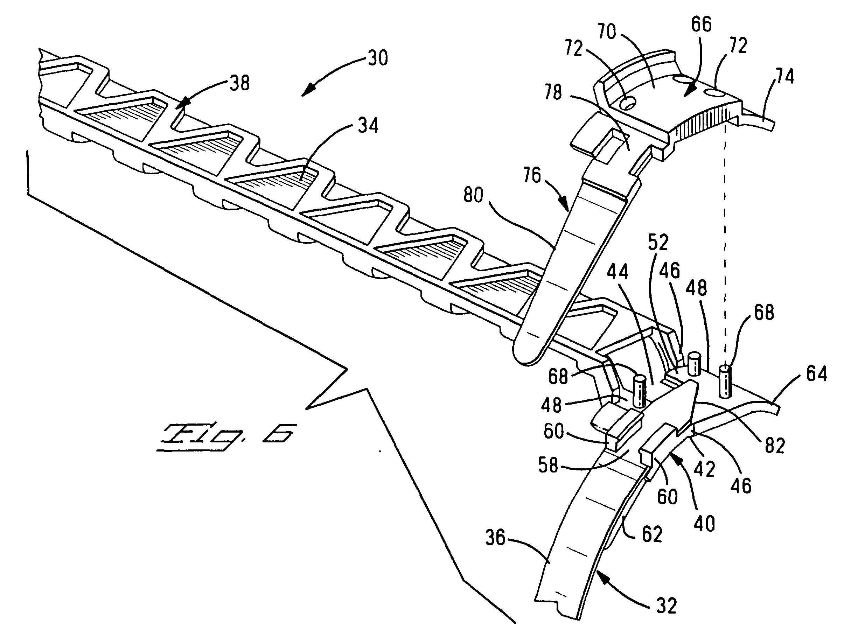

This is accomplished as shown in greater detail with reference to Figure 2 and Figure 3. The lead-in portion 4 has the fold line 10 established therealong such that by displacing a portion of the coil section 6 in the direction of arrow A the lead-in portion 4 and the coil portion 6 overlap one another about the fold 10. This creates a problem in that establishing this type of fold or crease may damage electrical conductors therein. This could occur immediately by exceeding the critical radius of the conductors or over time due to micro cracking and the stress imposed by way of the constant actuation of the steering wheel. It is important to note that cable, and especially flat cable, has a critical radius through which it may be folded and beyond the critical radius damage may occur.

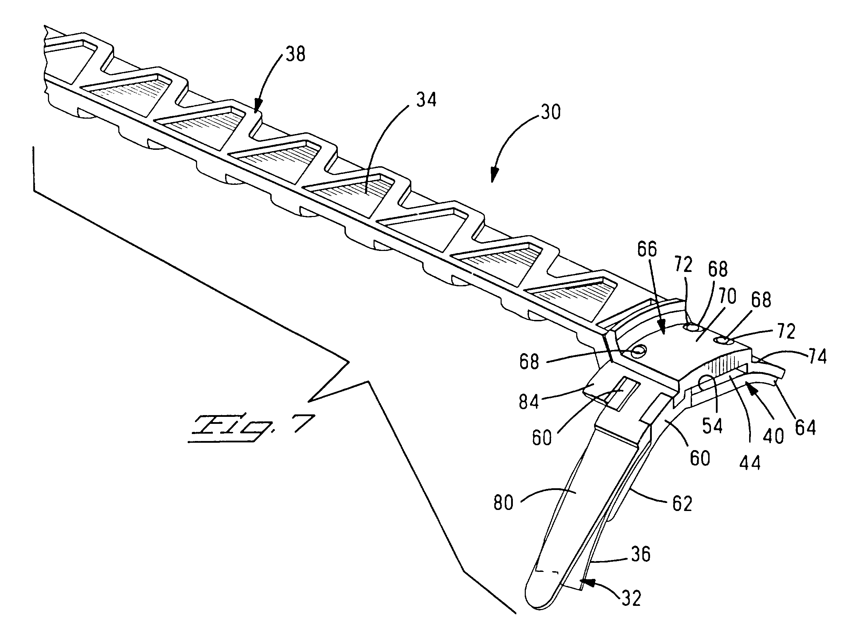

One particular solution to this problem is illustrated in Figure 4 where an adapter 14 having conductive members 16,18 extending therethrough includes mating ends 20,22 disposed at 90° relative to one another. By way of the adapter 14, the lead-in portion 4' and the coil portion 6' may be connected to produce the desired configuration without the need to form a fold in the conductor. This may be accomplished by either direct interconnection or the incorporation of a fastener 24 that would hold the conductor and the adapter 14 together. An example of a device of this type is presented in GB-A-2 248 146. This reference further discloses a "clock spring housing assembly" of the type described.

While the utilization of an adapter has eliminated the problems caused by forming a tight fold 10, the design results in a number of inefficiencies. First, it is necessary that the conductors be severed and then reconnected by way of the adapter 14. This adds additional cost and complication to the device as at least two additional interconnections, which are also subject to the possibility of electrical failure, must be created. In addition, use of this structure requires additional components to be used.

What is needed is a way to transition the conductors between the lead-in portion and the coiled portion that does not result in the tight fold of the connectors that could exceed the critical radius of the conductor and does not include additional components that result in higher cost associated with assembly and manufacture.

DE-A-40 27 952 discloses a saddle and an apparatus according to the preambles of claim 1 and claim 4.

It is an object of the present invention to retain the cable within the first track.

This object is accomplished by providing a saddle with the features of claim 1 and by providing an apparatus with the features of claim 4.
The saddle for directing an electrical conductor entering along a first axis and exiting along a second axis transversely disposed to the first axis comprises a first track corresponding to the first axis and a second track corresponding to the second axis, and further comprises an anvil having a directional changing leading edge being disposed above the first track so that the conductor may be routed thereabout so that a portion thereof is in overlying relation and the resulting fold is less than a critical radius of the cable.

It is an advantage of this invention that a directional change may be induced into a conductor without exceeding the critical radius thereof. It is another advantage of this invention that the directional changing leading edge of the anvil may be formed at various angles. It is yet another advantage of this invention that the anvil carrying the leading edge may be further adapted to retain the conductors within the first track by overlying the incoming conductor. It is still yet another advantage of this invention that the saddle may be directly connected to a strain relief/cable guiding structure. It is yet still another advantage of this invention that the saddle may be directly incorporated into the clock spring housing and affixed thereto, thereby minimizing manufacturing complexities.

The invention will now be described by way of example with reference to the following drawings, wherein:
Figure 1 is an upper perspective view of a conductor arranged in a clock spring manner according to the prior art;
Figure 2 is an upper plan view of a portion of the conductor of Figure 1 showing the fold 10 about which the conductor is creased according to the prior art;
Figure 3 shows an upper plan view of the conductor of Figure 2 in an over folded condition according to the prior art;
Figure 4 shows an upper plan view of an alternative prior art device useful to change direction of the electrical conductor;
Figure 5 is an upper perspective view of a device according to the present invention having the conductor initially placed therein;
Figure 6 is an upper perspective view of the present invention of Figure 5 shown with the conductor in the final assembled position; and
Figure 7 is an upper perspective view of the device of Figure 5 in a fully assembled condition.

With reference now to Figure 5, an apparatus according to the present invention is shown generally at 30. The apparatus 30 comprises a flat flexible cable 32 having a lead-in portion 34 and an exit portion 36. The lead-in portion 34 is disposed within a strain relief structure 38 that is more fully described with reference to U.K. Patent Application 9 425 584-1 filed 19 December 1994 (Docket No. 40265), corresponding to EP-A-0 718 160, which was published on 26.06.96.The strain relief 38 can be attached to a saddle 40 by way of a mechanical connection or integrally co-moulding the two components 38,40.

The saddle 40 includes a body portion 42 having a first track 44 extending generally thereacross for receipt of the flexible cable 32 therein. The first track 44 is disposed below a pair of anvils 46 which are suspended above the track 44 from side walls 48 to define a passageway wherein the cable 32 is disposed. Each of the anvils 46 include a leading edge 50 and an upper surface 52. The leading edge 50 of the anvils 46 is disposed at an angle to create the desired directional change of the exit portion 36 of the cable 32 such that when the cable 32 is folded back thereover the cable 32 is disposed along the second axis corresponding to the exit portion 36. Furthermore, the upper surface 52 of the anvils 46 is disposed above a base 54 (Figure 7) of the first track 44 an amount sufficient that a critical radius of the cable 32 is not exceeded when the exit portion 36 is folded about the leading edge 50 and laid across the upper surfaces 52. This is best seen in Figure 6 and is further described below.

The saddle 40 further includes a guide tongue 56 that carries the second track 58 that extends transversely to the first track 44. Disposed along the second track 58 on opposite sides thereof are retention members 60 configured to hold the exit portion 36 of the cable 32 within the second track 58. The tongue 56 further includes an exit portion 62 upon which the cable lies. Extending from the saddle 40 in a direction opposite the tongue 56 is a mounting arm 64. The mounting arm 64 is configured for the retention of a saddle cover 66 and/or for retaining the saddle within the clock spring canister (not shown). Further disposed upon the saddle 40 are a plurality of locating posts 68 for properly registering the saddle cover 66 thereupon.

The saddle cover 66 includes a body section 70 having corresponding openings 72 for receiving the posts 68 therein. Extending in one direction from the body 70 is a latching arm 74. The latching arm 74 inter-engages with the arm 64 to hold the saddle 40 and the cover 66 together. Extending from the opposite side of the body 70 is an overtongue 76 having a latch portion 78 configured to be retained by the gripping member 60 along the second track 58 of the saddle 40. Further, the guide tongue 76 includes a flexible overlying tongue portion 80. The cover 66 functions to overlie the exit end 36 of the cable 32 when it is within the saddle 40. In this manner, the cable 32 is laminated between the saddle 40 and the cover 66. The opposing tongues 80,62 guide the exit portion 36 from the second track 58 and provide some strain relief.

With reference now to Figure 6, the direction changing device 30 is shown with the exit portion 36 of the cable 32 disposed within the second track 58 (Figure 5). This is accomplished by forming a fold 82 about the directional changing leading edge 50 of the anvils 46 such that the exit portion 36 overlies the upper surface 52 of the anvils 46. The exit portion 36 is further disposed within gripper member 60 such that the exit portion 36 is disposed along the tongue section 62. In this position, the saddle 40 and the cable 32 are ready to receive the saddle cover 66 thereupon.

With reference now to Figure 7, the fully assembled device 30 may be seen such that the lead-in portion 34 of the cable 32 enters along a first axis and is displaced within the saddle 40 such that the exit portion 36 of the cable 32 is disposed along a second axis that is transverse to the first axis. The saddle cover 66 overlays the saddle 40 and the posts 68 are received within the holes 72 thereof. A latch arm 84 cooperates with one of the retention members 60 to further retain the saddle cover 66 therewith.

The device may be incorporated into the canister of a "clock spring" airbag connector system or may be used in a different type of structure. While the invention has been described with a strain relief 38 incorporated thereto, the strain relief is not a necessary part of the component and the strain relief may take on alternative forms than the one illustrated herein. Furthermore, while the saddle 40 has been described with reference to a pair of anvils 46, a greater or lesser number may be useful in various situations.

## Claims

1. A saddle (40) for establishing directional changes in a flexible cable (32), said saddle (40) comprising a first track (44) therealong and a second track (58) oriented transversely to the first track (44), the first track (44) and second track (58) being configured to receive corresponding portions of the cable (32) therein, the saddle (40) including an anvil (46) having a directional changing leading edge (50) and an upper surface (52), said anvil being disposed above the first track (44) the leading edge (50) being disposed at an angle such that folding the cable (32) thereover positions the cable in the second track (58) and the upper surface (52) being disposed above the first track (44) such that folding the cable establishes a fold (82) in the cable (32) having a radius greater than the critical radius of the cable (32), the saddle (40) characterised in that two anvils (46) extend partially over the first track (44) from opposite sides thereof such that the anvils retain the cable (32) therein, further characterised in that both anvils (46) have a leading edge (50), the leading edges (50) extending generally along a common line.

2. The saddle of claim 1, further characterised in that along the second track (58) on opposite sides thereof retention members (60) are arranged, to hold the cable (32) within the second track (58).

3. The saddle of claim 1 or 2, further characterised in that a plurality of locating posts (68) are disposed upon the saddle (40).

4. An apparatus (30) for an airbag system incorporating a clock spring canister therein, the apparatus comprising a flat flexible cable (2) having a lead-in (4) portion an exit portion (8) and a spirally wound canister portion (6) therebetween, the canister portion (6) being disposed transversely to the lead-in portion (4), and a clock spring canister wherein the canister portion (6) of the cable (2) is disposed with the lead-in portion (4) extending therefrom through a fold (10) in the cable (32); the apparatus (30) having a saddle (40) that cooperates with the canister to guide the cable (2) therein where the saddle (40) includes a first track (44) aligned with the lead-in portion, a second track (58) generally aligned with the canister portion of the cable and the saddle (40) further includes an anvil (46) having a directional changing leading edge (50) and an upper surface (52), said anvil being disposed above the first track (44) the leading edge (50) being disposed at an angle such that folding the cable (32) thereover positions the cable in the second track (58) and the upper surface (52) being disposed above the first track (44) such that folding the cable establishes a fold (82) in the cable (32) having a radius greater than the critical radius of the cable (32), characterised in that two anvils (46) extend partially over the first track (44) from opposite sides thereof such that the anvils retain the cable (32) therein, further characterised in that both anvils (46) have a leading edge (50), the leading edges (50) extending generally along a common line.

5. The apparatus of claim 4, further characterised in that a strain relief structure (38) is incorporated.

6. The apparatus of claim 4 or 5, further characterised in that a saddle cover (66) is latched to the saddle (40).

## Patentansprüche

1. Sattel (40) für das Bewirken von Richtungsänderungen in einem flexiblen Kabel (32), wobei der Sattel (40) aufweist: eine erste Bahn (44) längs dessen; und eine zweite Bahn (58), die quer zur ersten Bahn (44) ausgerichtet ist, wobei die erste Bahn (44) und die zweite Bahn (58) so ausgeführt sind, daß sie entsprechende Abschnitte des Kabels (32) darin aufnehmen, wobei der Sattel (40) einen Amboß (46) mit einer Richtungsänderungsvorderkante (50) und einer oberen Fläche (52) umfaßt, wobei der Amboß über der ersten Bahn (44) angeordnet ist, wobei die Vorderkante (50) unter einem Winkel so angeordnet ist, daß das Abbiegen des Kabels (32) darüber das Kabel in der zweiten Bahn (58) anordnet, und wobei die obere Fläche (52) über der ersten Bahn (44) so angeordnet ist, daß das Abbiegen des Kabels eine Falte (82) im Kabel (32) mit einem Radius bewirkt, der größer ist als der kritische Radius des Kabels (32), wobei der Sattel (40) dadurch gekennzeichnet ist, daß sich zwei Ambosse (46) teilweise über die erste Bahn (44) von deren gegenüberliegenden Seiten aus so erstrecken, daß die Ambosse das Kabel (32) darin halten, und außerdem dadurch gekennzeichnet ist, daß beide Ambosse (46) eine Vorderkante (50) aufweisen, wobei sich die Vorderkanten (50) im allgemeinen längs einer gemeinsamen Linie erstrecken.

2. Sattel nach Anspruch 1, außerdem dadurch gekennzeichnet, daß längs der zweiten Bahn (58) auf deren gegenüberliegenden Seiten Arretierelemente (60) angeordnet sind, um das Kabel (32) innerhalb der zweiten Bahn (58) zu halten.

3. Sattel nach Anspruch 1 oder 2, außerdem dadurch gekennzeichnet, daß eine Vielzahl von Montagestiften (68) auf dem Sattel (40) angeordnet sind.

4. Vorrichtung (30) für ein Airbag-System, die einen Uhrfederbehälter darin enthält, wobei die Vorrichtung aufweist: ein flaches, flexibles Kabel (2) mit einem Einführungsabschnitt (4), einem Austrittsabschnitt (8) und einem spiralförmig gewundenen Behälterabschnitt (6) dazwischen, wobei der Behälterabschnitt (6) quer zum Einführungsabschnitt (4) angeordnet ist; und einen Uhrfederbehälter, bei dem der Behälterabschnitt (6) des Kabels (2) so angeordnet ist, daß sich der Einführungsabschnitt (4) von dort aus durch eine Falte (10) im Kabel (32) erstreckt; wobei die Vorrichtung (30) einen Sattel (40) aufweist, der mit dem Behälter zusammenwirkt, um das Kabel (2) darin zu führen, wobei der Sattel (40) umfaßt: eine erste Bahn (44), die mit dem Einführungsabschnitt ausgerichtet ist; eine zweite Bahn (58), die im allgemeinen mit dem Behälterabschnitt des Kabels ausgerichtet ist; und wobei der Sattel (40) außerdem einen Amboß (46) mit einer Richtungsänderungsvorderkante (50) und einer oberen Fläche (52) umfaßt, wobei der Amboß über der ersten Bahn (44) angeordnet ist, wobei die Vorderkante (50) unter einem Winkel so angeordnet ist, daß das Abbiegen des Kabels (32) darüber das Kabel in der zweiten Bahn (58) anordnet, und wobei die obere Fläche (52) über der ersten Bahn (44) so angeordnet ist, daß das Abbiegen des Kabels eine Falte (82) im Kabel (32) mit einem Radius bewirkt, der größer ist als der kritische Radius des Kabels (32), dadurch gekennzeichnet, daß sich zwei Ambosse (46) teilweise über die erste Bahn (44) von deren gegenüberliegenden Seiten aus so erstrecken, daß die Ambosse das Kabel (32) darin halten; außerdem dadurch gekennzeichnet, daß beide Ambosse (46) eine Vorderkante (50) aufweisen, wobei sich die Vorderkanten (50) im allgemeinen längs einer gemeinsamen Linie erstrecken.

5. Vorrichtung nach Anspruch 4, außerdem dadurch gekennzeichnet, daß eine Zugentlastungskonstruktion (38) eingeschlossen ist.

6. Vorrichtung nach Anspruch 4 oder 5, außerdem dadurch gekennzeichnet, daß ein Satteldeckel (66) am Sattel (40) eingeklinkt ist.

## Revendications

1. Serre-fils (40) destiné à établir des changements de direction dans un câble flexible (32), ledit serre-fils (40) comprenant une première piste (44) le long de celui-ci et une deuxième piste (58) orientée transversalement à la première piste (44), la première piste (44) et la deuxième piste (58) étant configurées de sorte à recevoir les parties correspondantes du câble (32), le serre-fils (40) englobant un berceau (46) comportant un bord d'attaque de changement de direction (50) et une surface supérieure (52), ledit berceau étant agencé au-dessus de la première piste (44), le bord d'attaque (50) étant agencé à un angle tel que le pliage du câble (32) au-dessus de celui-ci positionne le câble dans la deuxième piste (58), la surface supérieure (52) étant agencée au-dessus de la première piste (44), de sorte que le pliage du câble établit un pli (82) dans le câble (32), avec un rayon supérieur au rayon critique du câble (32), le serre-fils (40) étant caractérisé en ce que deux berceaux (46) s'étendent partiellement au-dessus de la première piste (44) à partir des côtés opposés correspondants, de sorte que les berceaux y retiennent le câble (32), caractérisé en outre en ce que les deux berceaux (46) comportent un bord d'attaque (50), les bords d'attaque (50) s'étendant généralement le long d'une ligne commune.

2. Serre-fils selon la revendication 1, caractérisé en outre en ce que des éléments de retenue (60), destinés à retenir le câble (32) dans la deuxième piste (58), sont agencés le long de la deuxième piste (58) sur les côtés opposés correspondants.

3. Serre-fils selon les revendications 1 ou 2, caractérisé en outre en ce que plusieurs montants de positionnement (68) sont agencés sur le serre-fils (40).

4. Dispositif (30) pour un système de coussin d'air (sac gonflable), incorporant un récipient de ressort-moteur, le dispositif comprenant un câble flexible plat (2) comportant une partie d'entrée (4), une partie de sortie (8) et une partie de récipient enroulée en spirale (6) entre elles, la partie de récipient (6) étant agencée transversalement à la partie d'entrée (4), et un récipient de ressort-moteur, dans lequel est agencée la partie de récipient (6) du câble (2), la partie d'entrée (4), s'étendant à partir de celle-ci à travers un pli (10) dans le câble (32); le dispositif (30) comportant un serre-fils (40) coopérant avec le récipient pour y guider le câble (2), le serre-fils (40) englobant une première piste (44), alignée avec la partie d'entrée, une deuxième piste (58), alignée en général avec la partie de récipient du câble, le serre-fils (40) englobant en outre un berceau (46) comportant un bord d'attaque de changement de direction (50) et une surface supérieure (52), ledit berceau étant agencé au-dessus de la première piste (44), le bord d'attaque (50) étant agencé à un angle tel que le pliage du câble (32) au-dessus de celui-ci positionne le câble dans la deuxième piste (58), la surface supérieure (52) étant agencée au-dessus de la première piste (44), de sorte que le pliage du câble établit un pli (82) dans le câble (32), avec un rayon supérieur au rayon critique du câble (32), caractérisé en ce que deux berceaux (46) s'étendent partiellement au-dessus de la première piste (44), à partir des côtés opposés correspondants, de sorte que les berceaux retiennent le câble (32) dans celle-ci, caractérisé en outre en ce que les deux berceaux (46) comportent un bord d'attaque (50), les bords d'attaque (50) s'étendant en général le long d'une ligne commune.

5. Dispositif selon la revendication 4, caractérisé en outre en ce qu'un assemblage de décharge de traction (38) est incorporé.

6. Dispositif selon la revendication 4 ou la revendication 5, caractérisé en outre en ce qu'un couvercle du serre-fils (66) est verrouillé sur le serre-fils (40).
